# EUROPÄISCHE PATENTSCHRIFT

(11) **EP 2 872 811 B1**
(45) Veröffentlichungstag und Bekanntmachung des Hinweises auf die Patenterteilung: **12.07.2017**
(21) Anmeldenummer: 14726096.2
(22) Anmeldetag: 08.05.2014
(51) Int. Cl.: F16L 19/028

(54) **ROHRVERBINDUNG**
PIPE CONNECTION
RACCORD DE TUYAUTERIE

(30) Priorität: 23.05.2013 DE 102013105300
(43) Veröffentlichungstag der Anmeldung: 20.05.2015
(73) Patentinhaber: VOSS Fluid GmbH, 51688 Wipperfürth (DE)
(72) Erfinder: BERGHAUS, Gerd, 51515 Kürten (DE); POTT, Harald, 42499 Hückeswagen (DE)
(74) Vertreter: Patent- und Rechtsanwälte Dr. Solf & Zapf
(86) Internationale Anmeldenummer: PCT/EP2014/059407
(87) Internationale Veröffentlichungsnummer: WO 2014/187675

(56) Entgegenhaltungen:
- EP-A1- 2 360 405
- DD-A1- 225 480
- DE-A1-102005 042 033
- DE-C1- 10 108 309
- DE-U1-202005 017 913

## Beschreibung

Die vorliegende Erfindung betrifft eine Rohrverbindung zum Anschluss einer insbesondere metallischen dünnwandigen Rohrleitung, umfassend eine Rohrleitung mit einem umgeformten Verbindungsabschnitt, der von seinem Verbindungsende aus mit einem Kegelwinkel kegelstumpfförmig zunimmt und dort an seiner Außenumfangsfläche eine umlaufende Dichtfläche bildet und an diese anschließend eine Schulter mit einer Anschlagsfläche aufweist, und einen Anschlussstutzen mit einem Anschlussgewinde und einer Anschlussbohrung, die von ihrer Öffnung mit einem Kegelwinkel, der an den Kegelwinkel der Dichtfläche angepasst ist, kegelstumpfförmig abnimmt, und dort am Innenumfang eine umlaufende Anschlussfläche zur Anlage an der Dichtfläche bildet, und ein Überwurf-Verschraubungsteil mit einem Spanngewinde und mit einer Durchgangsöffnung, die am Innenumfang eine umlaufende Spannfläche zur Anlage an der Anschlagsfläche aufweist, wobei der Verbindungsabschnitt von der Schulter bis zum ursprünglichen Rohrumfang kegelstumpfförmig mit einem Kegelwinkel β abnimmt und dort an seiner Außenumfangsfläche die umlaufende Anschlagfläche bildet. Zudem betrifft die vorliegende Erfindung eine Rohrleitung und einen Anschlussstutzen für derartige Rohrverbindungen.

Oben beschriebene Rohrverbindungen werden zum Beispiel bei hydraulischen Systemen im Maschinen- und Fahrzeugbau verwendet.

So ist zum Beispiel eine derartige Rohrverbindung aus der DE 20 2005 017 913 U1 bekannt. Bei dieser Rohrverbindung wird eine Rohrleitung verwendet, deren Neigungswinkel des Verbindungsabschnitts am Verbindungsende zwischen 10 ° bis 30 ° zur Rohrachse liegt, bzw. deren Kegelwinkel zwischen 20 ° bis 60 ° zu dem kegelstumpfförmigen Verbindungsende liegt.

Derartige Rohrverbindungen werden für druckdichte Verbindungen zwischen einem Endbereich einer Sammelleitung für ein Wärmeträgermedium in einem Sonnenkollektor und einer zugeordneten Anschlussleitung verwendet.

Bekannte Rohrleitungen werden mit Rohrdrücken von bis zu 800 bar verwendet. Damit bei diesen Rohrdrücken die Dichtheit der Rohrverbindung zuverlässig gewährleistet ist, müssen ausreichend große axiale Spannkräfte durch das Überwurf-Verschraubungsteil auf den Verbindungsabschnitt der Rohrleitung, insbesondere auf die Anschlagsfläche und die Dichtfläche, und auf die Anschlussfläche des Anschlussstutzens übertragen werden. Die bekannten, durch Umformung hergestellten Rohrverbindungen weisen den Nachteil auf, dass insbesondere bei dünnwandigen Rohrleitungen beim Umformprozess an der Dichtfläche Inneneinfälle auftreten können. Das bedeutet, dass sich die Rohrwandung beim Umformprozess nicht an die Innenkontur des Umformwerkzeuges anlegt, sondern nach innen zur Rohrachse hin einfällt. Diese Inneneinfälle beeinträchtigen die Dichtfunktion der Rohrverbindung negativ, da die Dichtfläche der Rohrleitung im montierten Zustand nicht mehr vollflächig an der Anschlussfläche des Anschlussstutzens anliegt.

Der vorliegenden Erfindung liegt die Aufgabe zugrunde, eine Rohrverbindung, eine Rohrleitung und einen Anschlussstutzen für die Rohrverbindung zur Verfügung zu stellen, so dass bei insbesondere dünnwandigen Rohrleitungen beim Umformprozess Inneneinfälle vermieden werden, und gleichzeitig die Rohrverbindung eine ausreichende Dichtfunktion zur Verfügung stellen kann.

Erfindungsgemäß wird diese Aufgabe dadurch gelöst, dass die Durchgangsöffnung des Überwurf-Verschraubungsteils anschließend an das Spanngewinde mit einem Kegelwinkel β', der an den Kegelwinkel β des Verbindungsabschnitts im Bereich der Anschlagfläche angepasst ist, kegelstumpfförmig abnimmt, und dort am Innenumfang die umlaufende Spannfläche zur Anlage an der Anschlagfläche bildet, und der Kegelwinkel α des Verbindungsabschnitts im Bereich der Dichtfläche und der Kegelwinkel α' der Anschlussbohrung im Bereich der 38° bis 50° beträgt, der Kegelwinkel β des Verbindungsabschnitts im Bereich der Anschlagfläche und der Kegelwinkel β' der Durchgangsöffnung im Bereich der Spannfläche mindestens 90° größer sind als der Kegelwinkel α des Verbindungsabschnitts im Bereich der Dichtfläche sowie die Schulter eine Höhe besitzt, die 0,5 mm bis 5 mm, insbesondere 0,5 mm bis 3 mm und vorzugsweise 1 mm bis 2 mm beträgt, und vorzugsweise die Schulter sich unmittelbar an die Dichtfläche anschließt.. Durch den steileren Kegelwinkel von mindestens 38 ° kann die Dichtfläche in Richtung der Steigung bei gleicher Höhe der Schulter kürzer ausgebildet werden. Dadurch wird insbesondere bei dünnwandigen Rohren mit einem Verhältnis einer Wandstärke s der Rohrwand der Rohrleitung zum Außendurchmesser d der Rohrleitung von 0,04 ≤ s/d ≤ 0,08 ein Inneneinfall im Bereich der Dichtfläche beim Umformprozess vermieden. Außerdem kann weiterhin eine ausreichend große axiale Spannkraft durch das Überwurf-Verschraubungsteil auf den Verbindungsabschnitt der Rohrleitung, insbesondere auf die Anschlagsfläche und die Dichtfläche, und auf die Anschlussfläche des Anschlussstutzens übertragen werden, ohne den Verbindungsabschnitt plastisch zu verformen. Zudem ist bei einem Kegelwinkel α von 38 ° bis 50 ° auch eine ausreichend große Einspannkraft, die von der Dichtfläche in Richtung der Anschlussfläche senkrecht zur Dichtfläche verläuft, gewährleistet. Somit wird eine Rohrverbindung mit einer verbesserten Dichtfunktion zur Verfügung gestellt.

In einer weiteren Ausführungsform der Erfindung beträgt die Größe der Kegelwinkel α der Anschlussbohrung und des Verbindungsabschnitts im Bereich der Dichtfläche 38 ° bis 42 °, vorzugsweise 40 °. Dies ermöglicht eine besonders gute Ausgewogenheit zwischen der Vermeidung von Inneneinfällen an der Dichtfläche beim Umformprozess und der Dimensionierung der axialen Spannkraft und der Einspannkraft, so dass eine optimale Dichtfunktion der Rohrverbindung gewährleistet wird. Hierbei ist es erfindungsgemäß von Vorteil, wenn die radiale Höhe H der Schulter 0,5 mm bis 5 mm, insbesondere 0,5 mm bis 3 mm, vorzugsweise 1 mm bis 2 mm beträgt. Die Erfindung basiert auf der Erkenntnis, dass für eine zuverlässige Übertragung der axialen Spannkräfte die Schulter des Verbindungsabschnitts eine ausreichende Höhe in Abhängigkeit von Durchmesser und Wandstärke der Rohrleitung aufweisen soll.

In einer weiteren Ausführungsform der Erfindung nimmt der Verbindungsabschnitt von der Schulter bis zum ursprünglichen Rohrumfang kegelstumpfförmig mit einem Kegelwinkel β ab und bildet dort an seiner Außenumfangsfläche eine umlaufende Anschlagsfläche, wobei die Durchgangsöffnung des Überwurf-Verschraubungsteils anschließend an das Spanngewinde mit einem Kegelwinkel β', der an den Kegelwinkel des Verbindungsabschnitts im Bereich der Anschlagsfläche angepasst ist, kegelstumpfförmig abnimmt, und dort am Innenumfang eine umlaufende Spannfläche zur Anlage an der Anschlagsfläche bildet. Dies hat den Vorteil, dass der Verbindungsabschnitt der Rohrleitung beim Verschrauben radial eingespannt wird.

In einer vorteilhaften weiteren Ausführungsform der Erfindung ist der Kegelwinkel β mindestens 90 ° größer als der Kegelwinkel α. Insbesondere ist die Größe der Kegelwinkel β, β' des Verbindungsabschnitts im Bereich der Anschlagsfläche und der Durchgangsöffnung im Bereich der Spannfläche 120 ° bis 180 °und vorzugszweise 140 ° oder 180°, wobei im letzteren Fall keine Kegelform mehr gegeben ist. Dies verhindert ein Mitdrehen der Rohrleitung während der Montage. Zudem ermöglichen Kegelwinkel > 120 ° geringere Montageanzugsmomente, da die Normalkraft senkrecht zur Anschlagsfläche kleiner ist als bei Kegelwinkeln < 120 °. Bei einem Kegelwinkel von 180° werden die Reibkraft minimiert sowie Fluchtungsfehler zwischen dem angestauchten Rohrkonus und dem hinteren Rohrbereich ausgeglichen.

In einer weiteren Ausführungsform der Erfindung ist das Überwurf-Verschraubungsteil als Überwurfschraube ausgebildet, wobei das Anschlussgewinde des Anschlussstutzens als Innengewinde am Innenumfang der Anschlussbohrung des Anschlussstutzens, und das Spanngewinde als Außengewinde am Außenumfang der Überwurfschraube ausgebildet ist. Dies hat den Vorteil, dass die Rohrkontur tiefer in den Anschlussstutzen hineinragen kann, wodurch die axiale Einbauhöhe kleiner ist. Somit wird eine besonders kompakte Bauform für eine erfindungsgemäße Rohrverbindung geschaffen.

In einer weiteren Ausführungsform ist der Anschlussstutzen durch eine Formbohrung in einer Komponente eines Fluidsystems (z. B. ein Ventilblock oder ein Aggregat) ersetzt. Dies ermöglicht eine noch kompaktere Lösung und eine zusätzliche Kostenersparnis.

Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen. Es zeigen:
- Fig. 1: einen Querschnitt einer Ausführungsform einer Rohrleitung für eine erfindungsgemäße Rohrverbindung,
- Fig. 2: eine Seitenansicht mit Teilquerschnitt einer ersten Ausführungsform einer erfindungsgemäßen Rohrverbindung,
- Fig. 3: eine Seitenansicht mit Teilquerschnitt einer zweiten Ausführungsform einer erfindungsgemäßen Rohrverbindung,
- Fig. 4: eine Seitenansicht mit Teilquerschnitt einer dritten Ausführungsform einer erfindungsgemäßen Rohrverbindung,
- Fig. 5: eine Seitenansicht mit Teilquerschnitt einer vierten Ausführungsform einer erfindungsgemäßen Rohrverbindung,
- Fig. 6: einen Querschnitt einer Ausführungsform eines Werkzeugs zur Herstellung einer erfindungsgemäßen Rohrleitung mittels Axialstauchverfahren,
- Fig. 7: einen Querschnitt einer Ausführungsform eines Werkzeugs zur Herstellung einer erfindungsgemäßen Rohrleitung mittels Taumelverfahren und
- Fig. 8: eine Seitenansicht im Teilquerschnitt einer weiteren Ausführungsform einer erfindungsgemäßen Rohrverbindung.

In den verschiedenen Figuren der Zeichnung sind gleiche Teile stets mit denselben Bezugszeichen versehen.

In der anschließenden Beschreibung gilt als erfindungswesentlich offenbart, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben, und zwar in Kombination mit den Merkmalen des Anspruchs 1.

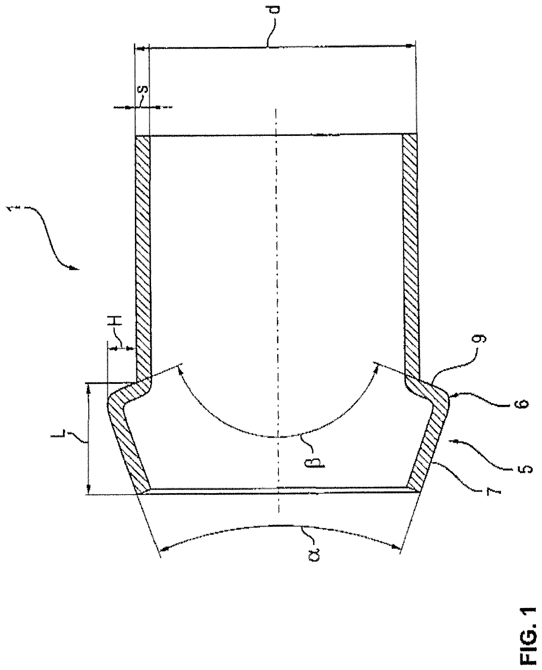

In Fig. 1 ist eine Ausführungsform einer Rohrleitung 1 für eine erfindungsgemäße Rohrverbindung dargestellt. Die Rohrleitung 1 ist insbesondere als eine dünnwandige Rohrleitung 1 ausgebildet. Die Rohrleitung 1 ist aus metallischen Rohrwerkstoffen, insbesondere aus Stahl, Kupfer, Messing oder Edelstahl ausgebildet. Als dünnwandige Rohrleitungen 1 im Sinne der Erfindung sind Rohrleitungen 1 anzusehen, für deren Verhältnis der Wandstärke s der Rohrwand 3 zum Außendurchmesser d der Rohrleitung 1 gilt 0,04 ≤ s/d ≤ 0,08.

Die Rohrleitung 1 weist an seinem Verbindungsende einen umgeformten Verbindungsabschnitt 5 mit einer Länge L auf. Der Verbindungsabschnitt 5 ist von dem Verbindungsende der Rohrleitung 1 kegelstumpfförmig zunehmend bis zu einem maximalen Umfang ausgebildet und bildet am Umfang der Rohrleitung 1 eine Schulter 6 mit einer Höhe H. Die Höhe H der Schulter beträgt bei erfindungsgemäßen Rohrleitungen in Abhängigkeit von Durchmesser und Wandstärke der Rohrleitung 0,5 mm bis 5 mm, insbesondere 0,5 mm bis 3 mm, vorzugsweise 1 mm bis 2 mm. Der kegelstumpfförmig zunehmende Bereich des Verbindungsabschnitts 5 bildet an seiner Außenumfangsfläche eine umlaufende Dichtfläche 7. Die Dichtfläche 7 und die Schulter 6 gehen unmittelbar ineinander über. Der Verbindungsabschnitt 5 weist in dem Bereich der Dichtfläche 7 einen Kegelwinkel α auf. In der dargestellten Ausführungsform ist der Verbindungsabschnitt 5 weiter von der Schulter 6 mit maximalem Umfang kegelstumpfförmig abnehmend bis zum ursprünglichen Rohrumfang ausgebildet. Der kegelstumpfförmig abnehmende Bereich des Verbindungsabschnitts 5 bildet an seiner Außenumfangsfläche eine umlaufende Anschlagsfläche 9. Der Verbindungsabschnitt 5 weist im Bereich der Anschlagsfläche 9 einen Kegelwinkel β auf. Alternativ zu dem kegelstumpfförmig abnehmenden Bereich kann der Verbindungsabschnitt 5 auch am maximalen Umfang eine zur Rohrachse senkrechte Anschlagsfläche bilden.

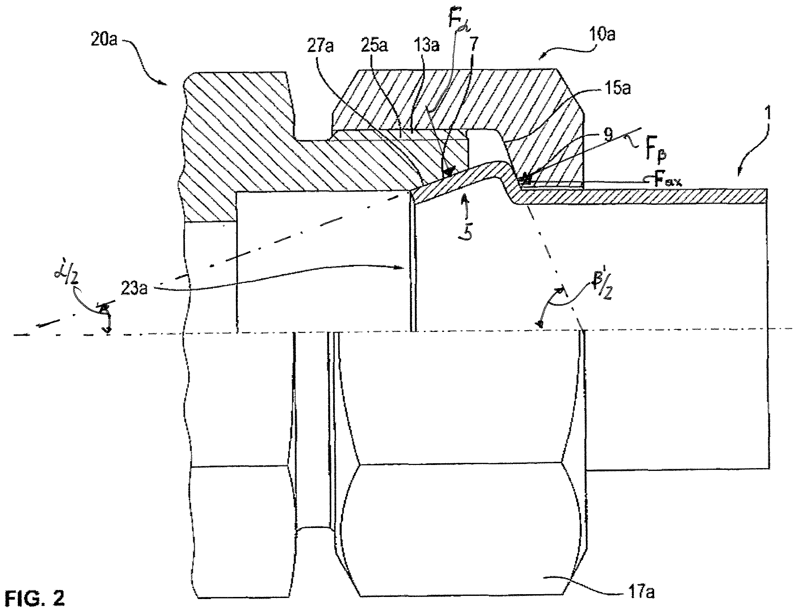

In Fig. 2 ist eine erste Ausführungsform einer erfindungsgemäßen Rohrverbindung im zusammengeschraubten Zustand dargestellt. Die Rohrverbindung umfasst eine Rohrleitung 1 gemäß Fig. 1, eine erste Ausführungsform eines als Überwurfmutter 10a ausgebildeten Überwurf-Verschraubungsteils und eine erste Ausführungsform eines entsprechend passend ausgebildeten Anschlussstutzens 20a.

Die Überwurfmutter 10a umfasst eine Durchgangsöffnung, mit der die Überwurfmutter 10a auf die Rohrleitung 1 aufgeschoben ist. An der dem Anschlussstutzen 20a zugekehrten Seite ist die Überwurfmutter 10a hohlzylindrisch ausgebildet und weist ein als Innengewinde ausgebildetes Spanngewinde 13a auf. Im Anschluss an das Spanngewinde 13a weist die Durchgangsöffnung einen kegelstumpfförmig abnehmenden Bereich auf, der am Innenumfang der Überwurfmutter 10a eine Spannfläche 15a bildet. Die Durchgangsöffnung weist im Bereich der Spannfläche 15a einen Kegelwinkel β' auf, der an den Kegelwinkel β des Verbindungsabschnitts 5 im Bereich der Anschlagsfläche 9 der Rohrleitung 1 angepasst ist. Alternativ zu dem kegelstumpfförmig abnehmenden Bereich der Durchgangsöffnung kann die Überwurfmutter 10a auch eine zur Rohrachse senkrechte Spannfläche bilden. An den kegelstumpfförmig abnehmenden Bereich der Durchgangsöffnung schließt sich ein weiterer hohlzylindrischer Bereich an, mit dem die Überwurfmutter 10a auf dem Außenumfang der Rohrleitung 1 beweglich sitzt. Am Außenumfang der Überwurfmutter ist ein Außensechskant 17a als Angriffsfläche für ein Schraubwerkzeug angeordnet.

Der Anschlussstutzen 20a ist hohlzylindrisch ausgebildet und umfasst an seiner der Überwurfmutter 10a zugewandten Seite eine Anschlussbohrung 23a zur Aufnahme der Rohrleitung 1 und an dem Außenumfang der Anschlussbohrung 23a ein als Außengewinde ausgebildetes Anschlussgewinde 25a zum Verschrauben der Überwurfmutter 10a mit dem Anschlussstutzen 20a. Die Anschlussbohrung 23a ist von der Stirnseite des Anschlussstutzens 20a ausgehend kegelstumpfförmig nach innen abnehmend ausgebildet, wobei der Innenumfang des Anschlussstutzens 20a in diesem Bereich eine Anschlussfläche 27a bildet. Die Anschlussbohrung 23a weist im Bereich der Anschlussfläche 27a einen Kegelwinkel α' auf, der an den Kegelwinkel α der Dichtfläche 7 der Rohrleitung 1 angepasst ist. An den kegelstumpfförmigen Bereich der Anschlussbohrung 23a schließt sich ein hohlzylindrischer Bereich der Anschlussbohrung 23a an, dessen Innendurchmesser dem kleinsten Innendurchmesser der Anschlussfläche 27a entspricht.

Das der Rohrleitung 1 abgewandte Ende des Anschlussstutzens 20a ist in Fig. 1 nicht dargestellt und kann sowohl zum Anschluss einer Komponente eines Fluidsystems (z. B. ein Ventilblock oder ein Aggregat) ausgebildet sein oder zum Anschluss einer weiteren Rohrleitung gespiegelt zum dargestellten Ende mit einer weiteren Anschlussbohrung 23a und einem weiteren Anschlussgewinde 25a ausgebildet sein.

Die Rohrleitung 1 ist in die Anschlussbohrung 23a des Anschlussstutzens 20a mit seinem Verbindungsabschnitt 5 eingesetzt, wobei die Überwurfmutter 10a mit dem Spanngewinde 13a auf dem Anschlussgewinde 25a des Anschlussstutzens 20a aufgeschraubt ist. Bei dem Verschrauben der Überwurfmutter 10a mit dem Anschlussstutzen 20a wird mittels der Spannfläche 15a der Überwurfmutter 10a eine axiale Spannkraft Fₐₓ auf die Anschlagsfläche 9 der Rohrleitung 1 ausgeübt, so dass die Dichtfläche 7 der Rohrleitung 1 gegen die Anschlussfläche 27a des Anschlussstutzens 20a gedrückt wird, so dass die Dichtfläche 7 an der Anschlussfläche 27a dichtend anliegt.

Der Verbindungsabschnitt 5 der Rohrleitung 1 ist insbesondere durch weiter unten beschriebene Axialstauchverfahren oder Taumelverfahren angeformt. Bei diesen Herstellungsverfahren tritt insbesondere bei dünnwandigen Rohrleitungen 1 das Problem auf, dass beim Umformprozess an der Dichtfläche 7 Inneneinfälle auftreten können, wenn die Länge der Dichtfläche 7 entlang der Steigung eine von Durchmesser, Wandstärke und Material der Rohrleitung abhängige bestimmte Länge übersteigt. Diese Inneneinfälle beeinträchtigen die Dichtfunktion der Rohrverbindung negativ, da die Dichtfläche 7 der Rohrleitung im montierten Zustand nicht mehr vollflächig an der Anschlussfläche 27a des Anschlussstutzens 20a anliegt. Es hat sich durch Versuche gezeigt, dass die Inneneinfälle an der Dichtfläche 7 bei der Herstellung des Verbindungsabschnitts 5 durch eine Verkürzung der axialen Länge der Dichtfläche 7 vermieden werden können. Allerdings muss dadurch bei einem gegebenen Kegelwinkel α des Verbindungsabschnitts 5 im Bereich der Dichtfläche 7 die Höhe der Schulter 6 reduziert werden. Dies beeinträchtigt jedoch die maximal mögliche Übertragung einer axialen Kraft Fₐₓ auf die Rohrleitung 1 beim Verschrauben des Überwurf-Verschraubungsteils negativ, so dass die Rohrleitung beschädigt werden kann, und die Dichtheit der Rohrverbindung beeinträchtigt wird. Wenn jedoch der Kegelwinkel α des Verbindungsabschnitts 5 vergrößert wird, kann die Länge der Dichtfläche 7 ohne eine Änderung der Höhe H der Schulter 6 des Verbindungsabschnitts 5 verkürzt werden. Allerdings nimmt die Einspannkraft Fα, die von der Dichtfläche 7 in Richtung der Anschlussfläche 27a senkrecht zur Dichtfläche 7 verläuft, an der Dichtfläche 7 mit zunehmendem Kegelwinkel α, α' ab, so dass die Dichtfunktion ab einer bestimmten Größe des Kegelwinkels α, α' nicht ausreichend gewährleistet ist.

Erfindungsgemäß weisen der Verbindungsabschnitt 5 im Bereich der Dichtfläche 7 und die Anschlussbohrung 23a im Bereich der Anschlussfläche 27a einen Kegelwinkel α bzw. α' auf, dessen Wert 38 ° bis 50 ° beträgt, insbesondere 38 ° bis 42 °. In der dargestellten bevorzugten Ausführungsform beträgt einer der Kegelwinkel α, α' = 40 °. Dadurch wird die Umformlänge der Rohrleitung 1 verkleinert und somit die Instabilität der Rohrleitung 1 reduziert und ein Inneneinfall an der Dichtfläche 7 insbesondere auch für die oben beschriebenen dünnwandigen Rohre beim Umformprozess vermieden. Gleichzeitig ist mit derartigen Kegelwinkeln α, α' für eine ausreichende Höhe H von 0,5 mm bis 5 mm, insbesondere von 0,5 mm bis 3 mm, vorzugsweise 1 mm bis 2 mm der Schulter 6 und eine ausreichend große senkrecht zur Dichtfläche 7 weisende Einspannkraft F_{α} gesorgt, so dass die Rohrleitung beim Verschrauben nicht beschädigt wird und eine ausreichende Dichtfunktion gewährleistet ist und die Dichtfläche 7 und die Anschlussfläche 27a vollflächig aneinander anliegen.

Zudem gewährleisten die Kegelwinkel α, α' ≥ 38 ° bis 50 °, dass die Rohrleitung 1 in der Endposition weniger deformiert wird und ein Kraftanstieg beim Erreichen der Endposition deutlicher wahrnehmbar ist.

Um ein Mitdrehen der Rohrleitung 1 während des Verschraubens des Überwurf-Verschraubungsteils, insbesondere der Überwurfmutter 10a, mit dem Anschlussstutzen 20a bei der Montage zu vermeiden, ist es vorteilhaft, wenn der Kegelwinkel β des Verbindungsabschnitts 5 im Bereich der Anschlagsfläche 9 und der Kegelwinkel β' der Durchgangsöffnung der Überwurfmutter 10a im Bereich der Spannfläche 15a mindestens 90 ° größer als die Kegelwinkel α, α' des Verbindungsabschnitts 5 im Bereich der Dichtfläche 7 und der Anschlussbohrung 23a im Bereich der Anschlussfläche 27a sind. Erfindungsgemäß liegt der Wert der Kegelwinkel β, β' in einem Bereich von 120 ° bis 180 °. Vorzugsweise betragen die Kegelwinkel β, β' 180°, wodurch die Reibkräfte minimiert werden sowie ein Ausgleich von Fluchtungsfehlern erreicht wird. In der dargestellten Ausführungsform betragen die Kegelwinkel β, β' = 140 °. Dies verhindert ein Mitdrehen der Rohrleitung 1 während der Montage. Zudem ermöglicht ein großer Kegelwinkel mit β, β' ≥ 120 ° geringere Montageanzugsmomente, da die Normalkraft F_{β} senkrecht zur Anschlagsfläche 9 kleiner ist als bei kleineren Kegelwinkeln β, β'. Allerdings ist ein Kegelwinkel β, β' < 180 ° zusätzlich vorteilhaft, da dies eine radiale Rohreinspannung an der Anschlagsfläche 9 gewährleistet.

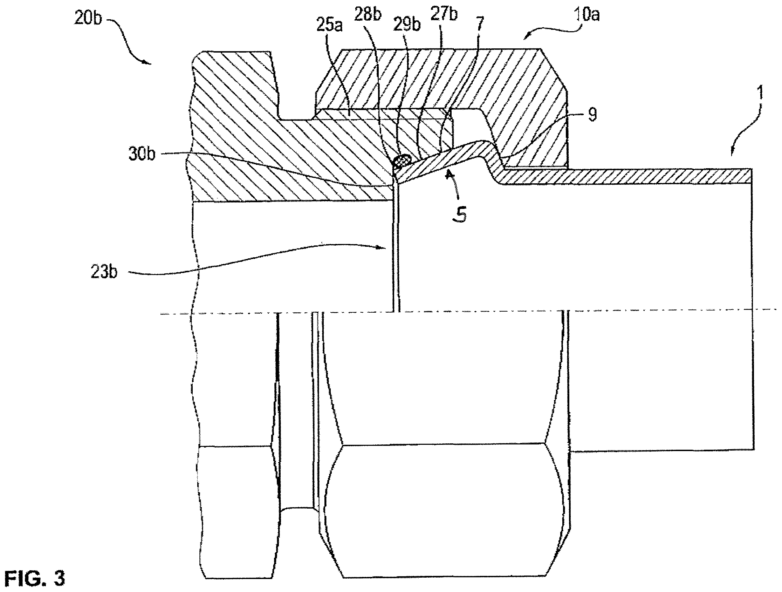

Die zweite erfindungsgemäße Ausführungsform nach Fig. 3 unterscheidet sich von der ersten Ausführungsform gemäß Fig. 2 insbesondere in der Ausgestaltung der Anschlussbohrung 23b des Anschlussstutzens 20b. Die Anschlussbohrung 23b ist von der Stirnseite des Anschlussstutzens 20b ausgehend ebenfalls kegelstumpfförmig nach innen abnehmend ausgebildet, wobei der Innenumfang des Anschlussstutzens 20b in diesem Bereich eine Anschlussfläche 27b bildet. Die Anschlussbohrung 23b weist in dem Bereich der Anschlussfläche 27b einen Kegelwinkel α' auf, der an den Kegelwinkel α des Verbindungsabschnitts 5 im Bereich der Dichtfläche 7 der Rohrleitung 1 angepasst ist.

Am Ende der Anschlussfläche 27b befindet sich eine umlaufende Dichtungsnut 28b zur Aufnahme einer Dichtung 29b. An die Dichtungsnut 28b schließt sich ein hohlzylindrischer Bereich an, dessen Innendurchmesser kleiner ist als der kleinste Innendurchmesser der Anschlussfläche 27b, so dass im Anschluss an die Dichtungsnut 28b eine vorteilhafterweise umlaufende Anschlagfläche 30b in der Anschlussbohrung 23b gebildet wird, die die Aufnahme der Rohrleitung 1 in der Anschlussbohrung 23b axial begrenzt. Dies hat den Vorteil, dass der Montageendpunkt durch einen Kraftanstieg bei der Montage einfacher erkannt werden kann.

Das der Rohrleitung 1 abgewandte Ende des Anschlussstutzens 20b ist in Fig. 3 nicht dargestellt und kann sowohl zum Anschluss einer Komponente eines Fluidsystems (z. B. ein Ventilblock oder ein Aggregat) ausgebildet sein oder zum Anschluss einer weiteren Rohrleitung 1 gespiegelt zum dargestellten Ende mit einer weiteren Anschlussbohrung 23b und einem weiteren Anschlussgewinde 25a ausgebildet sein.

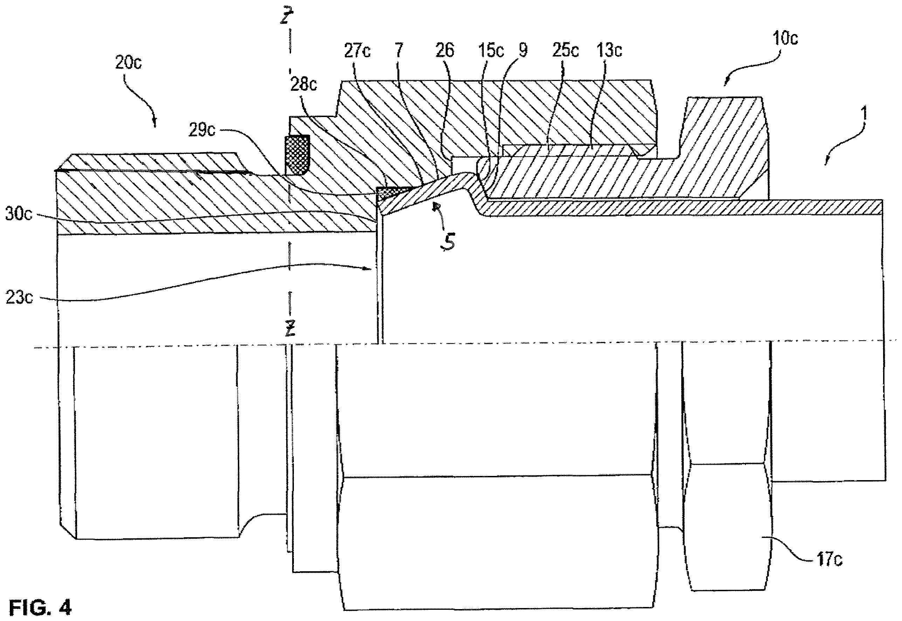

In Fig. 4 ist eine dritte Ausführungsform einer erfindungsgemäßen Rohrverbindung dargestellt. Diese Ausführungsform umfasst eine Rohrleitung 1 gemäß Fig. 1 und ein als Überwurfschraube 10c ausgebildetes Überwurf-Verschraubungsteil und einen Anschlussstutzen 20c.

Die Überwurfschraube 10c umfasst eine Durchgangsöffnung, mit der die Überwurfschraube 10c auf die Rohrleitung 1 aufgeschoben ist. An der dem Anschlussstutzen 20c zugekehrten Seite der Durchgangsöffnung weist die Überwurfschraube 10c ein als Außengewinde ausgebildetes Spanngewinde 13c auf. Im Anschluss an das Spanngewinde 13c ist am Außenumfang ein Außensechskant 17c als Angriffsfläche für ein Schraubwerkzeug angeordnet. Die dem Anschlussstutzen 20c zugekehrte Stirnfläche der Überwurfschraube 10c bildet eine kegelstumpfförmig nach innen zulaufende Durchgangsöffnung, die am Innenumfang eine Spannfläche 15c bildet. Die Durchgangsöffnung weist im Bereich der Spannfläche 15c einen Kegelwinkel β' auf, der an den Kegelwinkel β des Verbindungsabschnitts 5 im Bereich der Anschlagsfläche 9 der Rohrleitung 1 angepasst ist. Alternativ kann zu der kegelstumpfförmig zulaufenden Spannfläche 15c auch eine zur Rohrachse senkrechte Spannfläche ausgebildet sein. An den kegelstumpfförmig zulaufenden Bereich der Durchgangsöffnung schließt sich ein hohlzylindrischer Bereich an, mit dem die Überwurfschraube 10c auf dem Außenumfang der Rohrleitung 1 beweglich sitzt.

Der Anschlussstutzen 20c ist hohlzylindrisch ausgebildet und umfasst an seiner der Überwurfschraube 10c zugewandten Seite eine Anschlussbohrung 23c zur Aufnahme der Rohrleitung 1 und an dem Innenumfang der Anschlussbohrung 23c ein als Innengewinde ausgebildetes Anschlussgewinde 25c zum Verschrauben der Überwurfschraube 10c mit dem Anschlussstutzen 20c. In der Anschlussbohrung 23c ist im Anschluss an das Anschlussgewinde 25c am Innenumfang ein nach innen ragender umlaufender Ansatz 26 angeordnet. Daran anschließend ist die Anschlussbohrung 23c als ein kegelstumpfförmig nach innen zulaufender Bereich ausgebildet, der an seinem Innenumfang eine Anschlussfläche 27c bildet. Die Anschlussbohrung 23c weist im Bereich der Anschlussfläche 27c einen Kegelwinkel α' auf, der an den Kegelwinkel α des Verbindungsabschnitts 5 im Bereich der Dichtfläche 7 der Rohrleitung 1 angepasst ist.

Am Ende der Anschlussfläche 27c schließt sich ein hohlzylindrischer Dichtungsbereich 28c an, in dem eine Formdichtung 29c angeordnet ist. Die Formdichtung 29c ist derart ausgebildet, so dass sie sich an den Kegelwinkel α des Verbindungsabschnitts 5 im Bereich der Dichtfläche 7 der Rohrleitung 1 anpasst. An den Dichtungsbereich 28c schließt sich ein weiterer hohlzylindrischer Bereich an, dessen Innendurchmesser kleiner ist als der Innendurchmesser der Dichtungsfläche 28c, so dass im Anschluss an den Dichtungsbereich 28c eine umlaufende Anschlagfläche 30c in der Anschlussbohrung 23c gebildet wird, die die Aufnahme der Rohrleitung 1 in der Anschlussbohrung 23c axial begrenzt. Dies hat den Vorteil, dass der Montageendpunkt durch einen Kraftanstieg bei der Montage einfacher erkannt werden kann.

Das der Rohrleitung 1 abgewandte Ende des Anschlussstutzens 20c ist in Fig. 4 zum Anschluss einer Komponente eines Fluidsystems (z. B. ein Ventilblock oder ein Aggregat) ausgebildet dargestellt. Alternativ könnte es auch zum Anschluss einer weiteren Rohrleitung 1 gespiegelt mit einer weiteren Anschlussbohrung 23c und einem weiteren Anschlussgewinde 25c ausgebildet sein.

Bei der dritten Ausführungsform gemäß Fig. 4 sitzt der Anschlusspunkt für die Rohrkontur näher an der Einschraubebene Z-Z, wodurch die axiale Einbauhöhe zum Beispiel bis zum Beginn eines Rohrbogens deutlich kleiner ist. Somit wird eine besonders kompakte Bauform für eine erfindungsgemäße Rohrverbindung geschaffen.

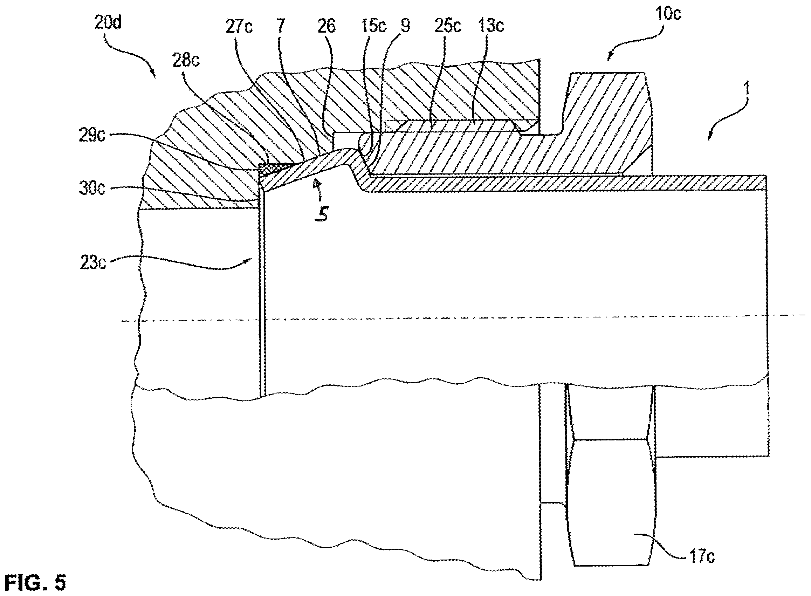

In Fig. 5 ist eine vierte Ausführungsform einer erfindungsgemäßen Rohrverbindung dargestellt. Diese Ausführungsform ist prinzipiell wie die dritte Ausführungsform in Fig. 4 aufgebaut, mit der gleichen Anschlussbohrung 23c, dem gleichen Anschlussgewinde 25c und der gleichen Überwurfschraube 10c. Allerdings befindet sich bei dieser Ausführungsform die Anschlussbohrung 23c nicht in einem speziellen Anschlussstutzen sondern in einer Komponente eines Fluidsystems (z. B. ein Ventilblock oder ein Aggregat) 20d. Dies ermöglicht eine noch kostengünstigere und platzsparendere Ausbildung einer erfindungsgemäßen Rohrverbindung.

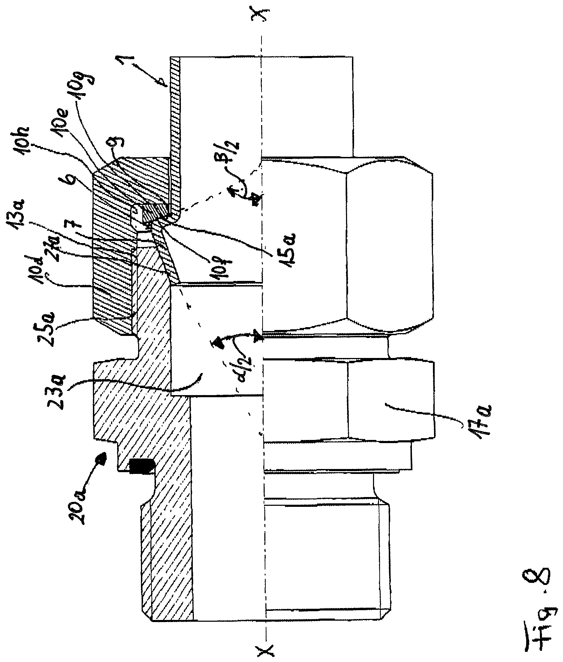

In Figur 8 ist eine weitere Ausführungsform einer erfindungsgemäßen Rohrverbindung dargestellt. Hierbei sind gleiche Teile bzw. Teile mit gleicher Funktion wie Teile in den Figuren 1 bis 6 enthalten, mit denselben Bezugszeichen gekennzeichnet.

Bei dieser Ausführung ist zwischen der dem Anschlussstutzen 20a zugekehrten Spannfläche 15a des Überwurf-Verschraubungsteils 10d und der Anschlagsfläche 9 der Rohrleitung 1 ein Zwischenring 10e angeordnet. Der Zwischenring 10e weist eine an der Anschlagsfläche 9 im angezogenen Zustand anliegende Gegenfläche 10f auf, die in ihrer Neigung zur Längsachse X-X der Rohrverbindung an die Neigung der Anschlagsfläche 9 gemäß dem Kegelwinkel β derart angepasst ist, dass eine vollflächige Kraftübertragung erfolgen kann. Weiterhin weist der Zwischenring 10e eine der Spannfläche 15a des Überwurf-Verschraubungsteils 10d gegenüberliegende Anlagefläche 10g auf. Vorzugsweise verlaufen die Spannfläche 15a und die Anlagefläche 10g senkrecht zur Längsachse X-X der Rohrverbindung. Zur Aufnahme bzw. Positionierung des Zwischenrings 10e weist das Überwurf-Verschraubungsteil 10d eine zur Längsachse X-X konzentrisch in Querschnitt kreisförmige Ausnehmung 10h auf, die in Verlängerung des Spanngewindes 13a angeordnet ist. Der erfindungsgemäße Zwischenring 10e bewirkt, dass Material-Grate, die an der Anschlagsfläche 9 bei der Umformung der Rohrleitung 1 aufgrund der hohen Verformungsdrücke zwischen den Segmenten 43 des Spannelementes 42 entstehen können, sich in das Überwurf-Verschraubungsteil 10d nicht eingraben, wodurch die Gefahr verhindert wird, dass bei der Endmontage die erfindungsgemäße Rohrleitung 1 beim Andrehen des Überwurf-Verschraubungsteils 10d mitgedreht würde. Der erfindungsgemäße Zwischenring 10e kann ein derartiges Mitdrehen sicher vermeiden. Durch die leicht konische Anschlagsfläche 9 an der Rohrleitung 1 und der in gleicher Weise konisch ausgestalteten Gegenfläche 10f des Zwischenrings 10e, z. B. unter dem Winkel β von beispielsweise 140°, kann sich der Zwischenring 10e zur Rohrleitung 1 zentrieren. Durch die radial verlaufende Anlagefläche 10g des Zwischenrings 10e und der entsprechend ausgerichteten Spannfläche 15a des Überwurf-Verschraubungsteils 10d werden an den beiden Kontaktflächen die Reibkräfte minimiert. Ein erfindungsgemäßer Zwischenring kann auch bei der Ausführung gemäß Fig. 4, 5 zwischen der Spannfläche 15c und der Anschlagsfläche 9 angeordnet sein, wobei hierbei z. B. die Spannfläche 15c senkrecht zur Längsachse X-X verlaufen kann und vorzugsweise die Anschlagsfläche 9 konisch verlaufen kann und der Zwischenring dann entsprechend verlaufende Kontaktflächen besitzt.

Wie bereits oben erwähnt, wird die erfindungsgemäße Rohrleitung 1 mittels eines Axialstauchverfahrens oder eines Taumelverfahrens hergestellt.

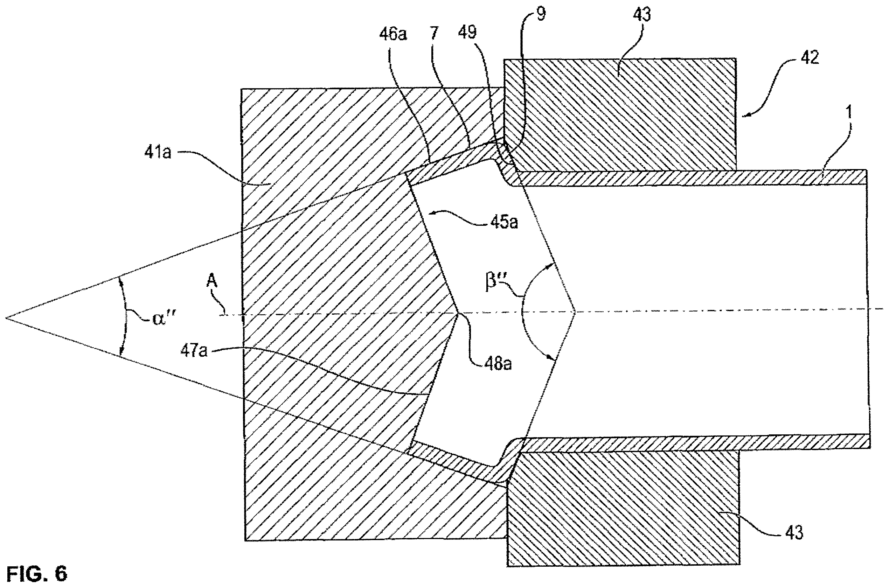

In Fig. 6 ist ein Werkzeug zur Herstellung einer erfindungsgemäßen Rohrleitung 1 gemäß Fig. 1 mittels eines Axialstauchverfahrens mit einer bereits umgeformten Rohrleitung 1 dargestellt. Das Werkzeug besteht aus einem Stauchwerkzeug 41 a und einem Spannelement 42. Das Stauchwerkzeug 41a formt die Dichtfläche 7 der Rohrleitung 1. Das Spannelement 42 formt die Anschlagsfläche 9 der Rohrleitung 1. Die Achse A des Stauchwerkzeuges 41a ist fluchtend mit der Achse A der Rohrleitung 1 angeordnet, wobei das Stauchwerkzeug 41a axial beweglich gelagert ist.

Das Stauchwerkzeug 41a weist an der dem Spannelement 42 zugewiesenen Seite eine Vertiefung 45a zur Aufnahme eines Endabschnitts einer umzuformenden Rohrleitung 1 auf. Die Vertiefung 45a ist an ihrem Rand kegelstumpfförmig mit einem Kegelwinkel α" ausgebildet, der an den Kegelwinkel α des Verbindungsabschnitts 5 der Rohrleitung 1 im Bereich der Dichtfläche 7 angepasst ist. Die Vertiefung 45a bildet an ihrem umlaufenden Rand eine Formfläche 46a. Der Boden 47a der Vertiefung 45a verläuft vom Rand der umlaufenden Formfläche 46a in Richtung des Spannelements 42 kegelförmig zugespitzt und bildet eine mit der Achse der umzuformenden Rohrleitung 1 fluchtende Spitze 48a. Dabei ist der Kegelwinkel des Bodens 180 ° - α", so dass die Kegelfläche des Bodens 47a einen 90 ° Winkel mit der Formfläche 46a einschließt. Der Durchmesser der Vertiefung 45a ist an den Rohrdurchmesser der umzuformenden Rohrleitung 1 angepasst. Das Spannelement 42 besteht insbesondere aus mehreren Segmenten 43, die sich radial öffnen und schließen lassen und die Rohrleitung 1 in axialer und radialer Richtung spannen beziehungsweise fixieren. Das Spannelement 42 bildet an der dem Stauchwerkzeug 41a zugewandten Seite eine kegelstumpfförmige Öffnung mit einem Kegelwinkel β", der an den Kegelwinkel β des Verbindungsabschnitts 5 der Rohrleitung 1 im Bereich der Anschlagsfläche 9 angepasst ist. An dem Umfang der kegelstumpfförmigen Öffnung wird eine zweite Formfläche 49 gebildet. Bei dem Axialstauchverfahren drückt das in der Rohrachse angeordnete Stauchwerkzeug 41 axial auf das Endstück der umzuformenden Rohrleitung 1 und formt die Kontur an der Rohrleitung 1 um. Dabei wird die Rohrleitung 1 hinter der Umformstelle durch die Segmente 43 des Spannelementes 42 kraft- und/oder formschlüssig gehalten.

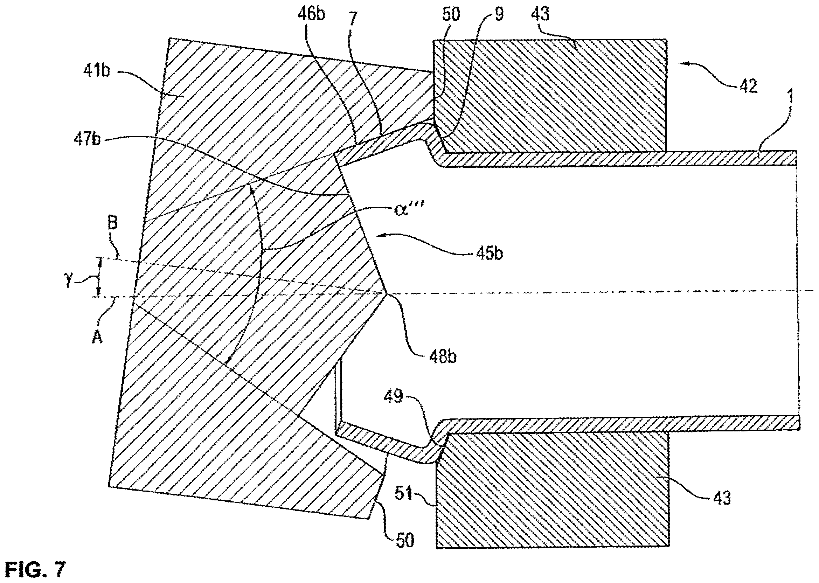

In Fig. 7 ist ein Werkzeug zur Herstellung einer erfindungsgemäßen Rohrleitung 1 gemäß Fig. 1 mittels eines Taumelverfahrens mit einer bereits umgeformten Rohrleitung 1 dargestellt. Das Werkzeug besteht aus einem Taumelwerkzeug 41 b und dem gleichen Spannelement 42, wie bereits bei dem Axialstauchverfahren beschrieben. Das Taumelwerkzeug 41 b formt die Dichtfläche 7 der Rohrleitung 1. Das Taumelwerkzeug 41 b weist eine zentrale Rotationachse B auf, um die das Taumelwerkzeug 41 b in einer Maschine in Rotationsrichtung frei beweglich gelagert ist, so dass es auf dem Umfang der Rohrleitung 1 abrollen kann. Außerdem ist das Taumelwerkzeug 41 b um die Rohrachse A rotatorisch und entlang der Rohrachse A axial beweglich gelagert. Die Rotationachse B ist schräg zur Rohrachse A angeordnet und schließt mit der Rohrachse A einen Taumelwinkel γ ein. Der Taumelwinkel γ liegt insbesondere zwischen 2 ° und 20 °. Bei dem dargestellten Taumelwerkzeug 41 b ist der Taumelwinkel γ 8°.

Das Taumelwerkzeug 41 b weist an der dem Spannelement 42 zugekehrten Seite eine Vertiefung 45b zur Aufnahme eines Endabschnitts einer umzuformenden Rohrleitung 1 auf. Die Vertiefung 45b ist an ihrem Rand kegelstumpfförmig mit einem Kegelwinkel α'" ausgebildet, der an den Kegelwinkel α des Verbindungsabschnitts 5 der Rohrleitung 1 im Bereich der Dichtfläche 7 und an den Taumelwinkel γ derart angepasst ist, so dass α'" = α + 2γ beträgt. Die Vertiefung 45b bildet an ihrem umlaufenden Rand eine Formfläche 46b. Ein Boden 47b der Vertiefung 45b verläuft vom Rand der umlaufenden Formfläche 46b in Richtung des Spannelements 42 kegelförmig zugespitzt und bildet eine in der Achse A der Rohrleitung 1 liegende Spitze 48b. Dabei beträgt der Kegelwinkel des Bodens 180 ° - α"', so dass die Kegelfläche des Bodens 47b einen 90 ° Winkel mit der Formfläche 46b einschließt. Der Durchmesser der Vertiefung 45b ist an den Rohrdurchmesser der umzuformenden Rohrleitung 1 angepasst. Das Taumelwerkzeug 41 b ist im die Öffnung der Vertiefung 45b umschließenden Randbereiche 50 mit dem Taumelwinkel γ kegelförmig ausgebildet, so dass ein bei der Rotation jeweils an dem Spannelement 42 anliegender Randbereich 50 parallel zur Stirnseite 51 des Spannelementes 42 verläuft. Bei dem Taumelverfahren wird das Taumelwerkzeug 41 b rotatorisch um die Rohrachse A angetrieben und gleichzeitig in axialer Richtung entlang der Rohrachse A auf das Endstück der Rohrleitung 1 vorgeschoben. Dabei drückt das schräg zur Rohrachse A angeordnete, rotierende Taumelwerkzeug 41 b nur lokal an einer Stelle des Umfangs auf das Endstück der Rohrleitung 1 und formt die Kontur an der Rohrleitung 1 an, wobei die Rohrleitung 1 ebenfalls hinter der Umformstelle durch das Spannelement 42 gehalten wird. Das Taumelverfahren hat den Vorteil, dass es besonders kraftschonend ist, da die benötigte Axialkraft etwa 2/3 niedriger als beim Axialstauchverfahren ist.

## Patentansprüche

1. Rohrverbindung zum Anschluss einer insbesondere metallischen dünnwandigen Rohrleitung (1), umfassend
- eine Rohrleitung (1) mit einem umgeformten Verbindungsabschnitt (5), der von seinem Verbindungsende aus mit einem Kegelwinkel α kegelstumpfförmig zunimmt und dort an seiner Außenumfangsfläche eine umlaufende Dichtfläche (7) bildet und an diese anschließend eine Schulter (6) mit einer Anschlagfläche (9) aufweist,
- und einen Anschlussstutzen (20a, 20b, 20c) mit einem Anschlussgewinde (25a, 25c) und einer Anschlussbohrung (23a, 23b, 23c), die von ihrer Öffnung mit einem Kegelwinkel α', der an den Kegelwinkel α des Verbindungsabschnitts (5) im Bereich der Dichtfläche (7) angepasst ist, kegelstumpfförmig abnimmt, und dort am Innenumfang eine umlaufende Anschlussfläche (27a, 27b, 27c) zur Anlage an der Dichtfläche (7) bildet,
- und ein Überwurf-Verschraubungsteil (10a, 10c) mit einem Spanngewinde (13a, 13c) und mit einer Durchgangsöffnung, die am Innenumfang eine umlaufende Spannfläche (15a, 15c) zur Anlage an der Anschlagfläche (9) aufweist, wobei der Verbindungsabschnitt (5) von der Schulter (6) bis zum ursprünglichen Rohrumfang kegelstumpfförmig mit einem Kegelwinkel β abnimmt und dort an seiner Außenumfangsfläche die umlaufende Anschlagfläche (9) bildet, und die Durchgangsöffnung des Überwurf-Verschraubungsteils (10a, 10c) anschließend an das Spanngewinde (13a, 13c) mit einem Kegelwinkel β', der an den Kegelwinkel β des Verbindungsabschnitts (5) im Bereich der Anschlagfläche (9) angepasst ist, kegelstumpfförmig abnimmt, und dort am Innenumfang die umlaufende Spannfläche (15a, 15c) zur Anlage an der Anschlagfläche (9) bildet, **dadurch gekennzeichnet, dass** der Kegelwinkel α des Verbindungsabschnitts (5) im Bereich der Dichtfläche (7) und der Kegelwinkel α' der Anschlussbohrung (23a, 23b, 23c) im Bereich der Anschlussfläche (27a, 27b, 27c) 38° bis 50° beträgt, der Kegelwinkel β des Verbindungsabschnitts (5) im Bereich der Anschlagfläche (9) und der Kegelwinkel β' der Durchgangsöffnung im Bereich der Spannfläche (15a, 15c) mindestens 90° größer sind als der Kegelwinkel α des Verbindungsabschnitts (5) im Bereich der Dichtfläche (7) sowie die Schulter (6) eine Höhe (H) besitzt, die 0,5 mm bis 5 mm, insbesondere 0,5 mm bis 3 mm und vorzugsweise 1 mm bis 2 mm beträgt, und vorzugsweise die Schulter (6) sich unmittelbar an die Dichtfläche (7) anschließt.

2. Rohrverbindung nach Anspruch 1
**dadurch gekennzeichnet, dass**
der Kegelwinkel α des Verbindungsabschnitts (5) im Bereich der Dichtfläche (7) und der Kegelwinkel α' der Anschlussbohrung (23a, 23b, 23c) im Bereich der Anschlussfläche (27a, 27b, 27c) 38° bis 42°, vorzugsweise 40° beträgt.

3. Rohrverbindung nach Anspruch 1 oder 2,
**dadurch gekennzeichnet, dass**
der Kegelwinkel β des Verbindungsabschnitts (5) im Bereich der Anschlagfläche (9) und der Kegelwinkel β' der Durchgangsöffnung im Bereich der Spannfläche (15a, 15c) 120° bis einschließlich 180° betragen.

4. Rohrverbindung nach einem der Ansprüche 1 bis 3,
**dadurch gekennzeichnet, dass**
der Kegelwinkel β des Verbindungsabschnitts (5) im Bereich der Anschlagfläche (9) und der Kegelwinkel β' der Durchgangsöffnung im Bereich der Spannfläche (15a, 15c) 140° oder 180° betragen.

5. Rohrverbindung nach einem der Ansprüche 1 bis 4,
**dadurch gekennzeichnet, dass**
für das Verhältnis der Wandstärke (s) der Rohrwand (3) der Rohrleitung (1) zum Außendurchmesser (d) der Rohrleitung (1) gilt: 0,04 ≤ s/d ≤ 0,08.

6. Rohrverbindung zum Anschluss einer insbesondere metallischen dünnwandigen Rohrleitung (1), umfassend eine Rohrleitung (1) mit einem umgeformten Verbindungsabschnitt (5), der von seinem Verbindungsende aus mit einem Kegelwinkel α kegelstumpfförmig zunimmt und dort an seiner Außenumfangfläche eine umlaufende Dichtfläche (7) bildet und an diesen anschließend eine Schulter (6) mit einer Anschlagfläche (9) aufweist, und einen Anschlussstutzen (20a, 20b, 20c) mit einem Anschlussgewinde (25a, 25c) und einer Anschlussbohrung (23a, 23b, 23,c), die von ihrer Öffnung mit einem Kegelwinkel α', der an den Kegelwinkel α des Verbindungsabschnittes (5) im Bereich der Dichtfläche (7) angepasst ist, kegelstumpfförmig abnimmt und dort am Innenumfang eine umlaufende Anschlussfläche (27,a, 27b, 27c) zur Anlage an der Dichtfläche (7) bildet, und ein Überwurf-Verschraubungsteil (10a, 10c) mit einem Spanngewinde (13a, 13c) und mit einer Durchgangsöffnung, die am Innenumfang eine umlaufende Spannfläche (15a) zur Anlage an einer Gegenfläche (10f) aufweist, wobei der Verbindungsabschnitt (5) von der Schulter (6) bis zum ursprünglichen Rohrumfang kegelstumpfförmig mit einem Kegelwinkel β abnimmt und an seiner Außenumfangsfläche die umlaufende Anschlagfläche (9) bildet, und zwischen der dem Anschlussstutzen (20a) zugekehrten Spannfläche (15a) eines Überwurf-Verschraubungsteils (10d) und der Anschlagfläche (9) auf der Rohrleitung (1) ein Zwischenring (10e) derart angeordnet ist, dass bei der Endmontage der Rohrleitung (1) ein Mitdrehen der Rohrleitung (1) verhindert wird, **dadurch gekennzeichnet, dass**
der Kegelwinkel α des Verbindungsabschnitts (5) im Bereich der Dichtfläche (7) und der Kegelwinkel α' an der Anschlussbohrung (23a, 23b, 23c) im Bereich der Anschlussfläche (27a, 27b, 27c) 38° bis 50° beträgt, wobei der Zwischenring (10e) eine an der Anschlagfläche (9) anliegende Gegenfläche (10f) aufweist, die in ihrer Neigung zur Längsachse (X-X) der Rohrverbindung an die Neigung der Anschlagfläche (9) gemäß dem Kegelwinkel β angepasst ist.

7. Rohrverbindung nach Anspruch 6,
**dadurch gekennzeichnet, dass**
der Zwischenring (10e) eine der Spannfläche (15a) des Überwurf-Verschraubungsteils (10d) gegenüberliegende Anlagefläche (10g) aufweist, wobei die Spannfläche (15a) und die Anlagefläche (10g) vorzugsweise senkrecht zur Längsachse (X-X) der Rohrverbindung ausgerichtet sind.

8. Rohrverbindung nach Anspruch 6 oder 7,
**dadurch gekennzeichnet, dass**
der Kegelwinkel α des Verbindungsabschnittes (5) im Bereich der Dichtfläche (7) und der Kegelwinkel α' der Anschlussbohrung (23a, 23b, 23c) im Bereich der Anschlussfläche (27a, 27b, 27c) 30° bis 42°, vorzugsweise 40° beträgt.

9. Rohrverbindung nach einem der Ansprüche 6 bis 8,
**dadurch gekennzeichnet, dass**
der Kegelwinkel β des Verbindungsabschnittes (5) im Bereich der Anschlagfläche (9) mindestens 90° größer ist als der Kegelwinkel α des Verbindungsabschnittes (5) im Bereich der Dichtfläche (7) und insbesondere 120° bis einschließlich 180° beträgt und vorzugsweise 140° oder 180° beträgt.

10. Rohrverbindung nach einem der Ansprüche 6 bis 9,
**dadurch gekennzeichnet, dass**
die Schulter (6) eine Höhe (H) besitzt, die 0,5 mm bis 5 mm, insbesondere 0,5 mm bis 3 mm, und vorzugsweise 1 mm bis 2 mm beträgt, und vorzugsweise die Schulter (6) sich unmittelbar an die Dichtfläche (7) anschließt.

11. Rohrverbindung nach einem der Ansprüche 6 bis 10,
**dadurch gekennzeichnet, dass**
für das Verhältnis der Wandstärke (s) der Rohrwand (3) der Rohrleitung (1) zum Außendurchmesser (d) der Rohrleitung (1) gilt: 0,04 ≤ s/d ≤ 0,08.

12. Rohrverbindung nach einem der Ansprüche 1 bis 11,
**dadurch gekennzeichnet, dass**
die Anschlussbohrung (23a, 23b, 23c) eine Anschlagfläche (30b, 30c) zur axialen Begrenzung des Anzugweges der Rohrleitung (1) aufweist.

13. Rohrverbindung nach einem der Ansprüche 1 bis 12,
**dadurch gekennzeichnet, dass**
die Anschlussfläche (27a, 27b, 27c) der Anschlussbohrung (23a, 23b, 23c) eine umlaufende Dichtungsnut (28b) zur Aufnahme einer Dichtung (29b) aufweist.

14. Rohrverbindung nach einem der Ansprüche 1 bis 13,
**dadurch gekennzeichnet, dass**
sich in der Anschlussbohrung (23a, 23b, 23c) an die Anschlussfläche (27a, 27b, 27c) ein hohlzylindrischer Dichtungsbereich (28c) anschließt, in dem eine Formdichtung (29c) angeordnet ist.

15. Rohrverbindung nach Anspruch 14,
**dadurch gekennzeichnet, dass**
die Formdichtung (29c) derart ausgebildet ist, so dass sie sich an den Kegelwinkel α des Verbindungsabschnitts (5) im Bereich der Dichtfläche (7) der Rohrleitung (1) anpasst.

16. Rohrverbindung nach einem der Ansprüche 1 bis 15,
**dadurch gekennzeichnet, dass**
das Überwurf-Verschraubungsteil als Überwurfmutter (10a) ausgebildet ist, wobei das Anschlussgewinde (25a) des Anschlussstutzens (20a, 20b) als Außengewinde am Außenumfang des Anschlussstutzens (20a, 20b), und das Spanngewinde (13a) als Innengewinde am Innenumfang der Durchgangsöffnung der Überwurfmutter (10a) ausgebildet ist.

17. Rohrverbindung nach einem der Ansprüche 1 bis 15,
**dadurch gekennzeichnet, dass**
das Überwurf-Verschraubungsteil als Überwurfschraube (10c) ausgebildet ist, wobei das Anschlussgewinde (25c) des Anschlussstutzens (20c) als Innengewinde am Innenumfang der Anschlussbohrung (23c) des Anschlussstutzens (20c), und das Spanngewinde (13c) als Außengewinde am Außenumfang der Überwurfschraube (10c) ausgebildet ist.

18. Rohrleitung (1) für eine Rohrverbindung nach einem der Ansprüche 1 bis 17,
**gekennzeichnet durch**
die Merkmale der Rohrleitung (1) nach einem der Ansprüche 1 bis 12.

19. Anschlussstutzen (20a, 20b, 20c) für eine Rohrverbindung nach einem der Ansprüche 1 bis 15,
**gekennzeichnet durch** die Merkmale des Anschlussstutzens (20a, 20b, 20c) nach einem der Ansprüche 1 bis 17.

## Claims

1. Pipe connection for connecting an in particular metallic thin-walled pipeline (1), comprising
- a pipeline (1) having a formed connection portion (5) which emanating from the connection end thereof increases in a truncated-cone shaped manner at a cone angle α and there on the outer circumferential face thereof forms an encircling sealing face (7) and, adjoining thereto, has a shoulder (6) having a locating face (9),
- and a connector port (20a, 20b, 20c) having a connector thread (25a, 25c) and a connector bore (23a, 23b, 23c) which emanating from the opening thereof decreases in a truncated-cone shaped manner at a cone angle α' which is adapted to the cone angle α of the connection portion (5) in the region of the sealing face (7) and there on the inner circumference forms an encircling connector face (27a, 27b, 27c) for bearing on the sealing face (7),
- and a collar screw part (10a, 10c) having a tension thread (13a, 13c) and having a through opening which on the inner circumference has an encircling tension face (15a, 15c) for bearing on the locating face (9), wherein the connection portion (5) from the shoulder (6) up to the original pipe circumference decreases in a truncated-cone shaped manner at a cone angle β and there on the outer circumferential face thereof forms the encircling locating face (9), and the through opening of the collar screw part (10a, 10c) adjoining the tension thread (13a, 13c) decreases in a truncated-cone shaped manner at a cone angle β' which is adapted to the cone angle (3 of the connection portion (5) in the region of the locating face (9) and there on the inner circumference forms the encircling tension face (15a, 15c) for bearing on the locating face (9),
**characterized in that**
the cone angle α of the connection portion (5) in the region of the sealing face (7), and the cone angle α' of the connector bore (23a, 23b, 23c) in the region of the connector face (27a, 27b, 27c) are 38° to 50°, the cone angle β of the connection portion (5) in the region of the locating face (9), and the cone angle β' of the through opening in the region of the tension face (15a, 15c) is larger than the cone angle α of the connection portion (5) in the region of the sealing face (7) by at least 90° and also the shoulder (6) has a height (H) which is 0.5 mm to 5 mm, in particular 0.5 mm to 3 mm, and preferably 1 mm to 2 mm, and the shoulder (6) preferably directly adjoins the sealing face (7).

2. Pipe connection according to Claim 1,
**characterized in that**
the cone angle α of the connection portion (5) in the region of the sealing face (7), and the cone angle α' of the connector bore (23a, 23b, 23c) in the region of the connector face (27a, 27b, 27c) are 38° to 42°, preferably 40°.

3. Pipe connection according to Claim 1 or 2,
**characterized in that**
the cone angle β of the connection portion (5) in the region of the locating face (9), and the cone angle β' of the through opening in the region of the tension face (15a, 15c) are 120° to and including 180°.

4. Pipe connection according to one of Claims 1 to 3,
**characterized in that**
the cone angle β of the connection portion (5) in the region of the locating face (9), and the cone angle β' of the through opening in the region of the tension face (15a, 15c) are 140° or 180°.

5. Pipe connection according to one of Claims 1 to 4,
**characterized in that**
the following applies to the ratio of the wall thickness (s) of the pipe wall (3) of the pipeline (1) to the outer diameter (d) of the pipeline (1): 0.04 ≤ s/d ≤ 0.08.

6. Pipe connection for connecting an in particular metallic thin-walled pipeline (1), comprising a pipeline (1) having a formed connection portion (5) which emanating from the connection end thereof increases in a truncated-cone shaped manner at a cone angle α and there on the outer circumferential face thereof forms an encircling sealing face (7) and, adjoining thereto, has a shoulder (6) having a locating face (9), and a connector port (20a, 20b, 20c) having a connector thread (25a, 25c) and a connector bore (23a, 23b, 23c) which emanating from the opening thereof decreases in a truncated-cone shaped manner at a cone angle α' which is adapted to the cone angle α of the connection portion (5) in the region of the sealing face (7) and there on the inner circumference forms an encircling connector face (27a, 27b, 27c) for bearing on the sealing face (7), and a collar screw part (10a, 10c) having a tension thread (13a, 13c) and having a through opening which on the inner circumference has an encircling tension face (15a) for bearing on a mating face (10f), wherein the connection portion (5) from the shoulder (6) up to the original pipe circumference decreases in a truncated-cone shaped manner at a cone angle β and on the outer circumferential face thereof forms the encircling locating face (9), and a baffle ring (10e) is disposed in such a manner between that tension face (15a) of a collar screw part (10d) that faces the connector port (20a) and the locating face (9) of the pipeline (1) that conjoint rotation of the pipeline (1) during final assembly of the pipeline (1) is prevented,
**characterized in that**
the cone angle α of the connection portion (5) in the region of the sealing face (7), and the cone angle α' of the connector bore (23a, 23b, 23c) in the region of the connector face (27a, 27b, 27c), are 38° to 50°,
wherein the baffle ring (10e) has a mating face (10f) which bears on the locating face (9) and which in its inclination in relation to the longitudinal axis (X-X) of the pipe connection is adapted to the inclination of the locating face (9) according to the cone angle β.

7. Pipe connection according to Claim 6,
**characterized in that**
the baffle ring (10e) has a bearing face (10g) which lies opposite the tension face (15a) of the collar screw part (10d), wherein the tension face (15a) and the bearing face (10g) are preferably oriented so as to be perpendicular to the longitudinal axis (X-X) of the pipe connection.

8. Pipe connection according to Claim 6 or 7,
**characterized in that**
the cone angle α of the connection portion (5) in the region of the sealing face (7), and the cone angle α' of the connector bore (23a, 23b, 23c) in the region of the connector face (27a, 27b, 27c), are 30° to 42°, preferably 40°.

9. Pipe connection according to one of Claims 6 to 8,
**characterized in that**
the cone angle β of the connection portion (5) in the region of the locating face (9) is larger than the cone angle α of the connection portion (5) in the region of the sealing face (7) by at least 90°, and is in particular 120° to and including 180°, and is preferably 140° or 180°.

10. Pipe connection according to one of Claims 6 to 9,
**characterized in that**
the shoulder (6) has a height (H) which is 0.5 mm to 5 mm, in particular 0.5 mm to 3 mm, and preferably 1 mm to 2 mm, and the shoulder (6) preferably directly adjoins the sealing face (7).

11. Pipe connection according to one of Claims 6 to 10,
**characterized in that**
the following applies to the ratio of the wall thickness (s) of the pipe wall (3) of the pipeline (1) to the outer diameter (d) of the pipeline (1): 0.04 ≤ s/d ≤ 0.08.

12. Pipe connection according to one of Claims 1 to 11,
**characterized in that**
the connector bore (23a, 23b, 23c) has a locating face (30b, 30c) for axially delimiting the tightening path of the pipeline (1).

13. Pipe connection according to one of Claims 1 to 12,
**characterized in that**
the connector face (27a, 27b, 27c) of the connector bore (23a, 23b, 23c) has an encircling sealing groove (28b) for receiving a seal (29b).

14. Pipe connection according to one of Claims 1 to 13,
**characterized in that**
a hollow-cylindrical sealing region (28c), in which a gasket (29c) is disposed, adjoins the connector face (27a, 27b, 27c) in the connector bore (23a, 23b, 23c).

15. Pipe connection according to Claim 14,
**characterized in that**
the gasket (29c) is configured in such a manner that the latter adapts to the cone angle α of the connection portion (5) in the region of the sealing face (7) of the pipeline (1).

16. Pipe connection according to one of Claims 1 to 15,
**characterized in that**
the collar screw part is configured as a cap nut (10a), wherein the connector thread (25a) of the connector port (20a, 20b) is configured as an external thread on the outer circumference of the connector port (20a, 20b), and the tension thread (13a) is configured as an internal thread on the inner circumference of the through opening of the cap nut (10a).

17. Pipe connection according to one of Claims 1 to 15,
**characterized in that**
the collar screw part is configured as a cap screw (10c), wherein the connector thread (25c) of the connector port (20c) is configured as an internal thread on the inner circumference of the connector bore (23c) of the connector port (20c), and the tension thread (13c) is configured as an external thread on the outer circumference of the cap screw (10c).

18. Pipeline (1) for a pipe connection according to one of Claims 1 to 17,
**characterized by**
the features of the pipeline (1) according to one of Claims 1 to 12.

19. Connector port (20a, 20b, 20c) for a pipe connection according to one of Claims 1 to 15,
**characterized by**
the features of the connector port (20a, 20b, 20c) according to one of Claims 1 to 17.

## Revendications

1. Raccord de tuyauterie pour le raccordement d'une conduite tubulaire (1) à paroi mince, en particulier métallique, comprenant
- une conduite tubulaire (1) avec une portion de connexion façonnée (5) qui augmente sous forme tronconique depuis son extrémité de connexion suivant un angle de conicité α et qui forme à cet endroit au niveau de sa surface périphérique extérieure une surface d'étanchéité périphérique (7) et qui présente un épaulement (6) se raccordant à celle-ci avec une surface de butée (9),
- et une tubulure de raccordement (20a, 20b, 20c) avec un filetage de raccordement (25a, 25c) et un alésage de raccordement (23a, 23b, 23c) qui diminue depuis son ouverture sous forme tronconique avec un angle de conicité α' qui est adapté à l'angle de conicité α de la portion de connexion (5) dans la région de la surface d'étanchéité (7), et qui forme à cet endroit au niveau de la périphérie intérieure une surface de raccordement périphérique (27a, 27b, 27c) pour l'application contre la surface d'étanchéité (7),
- et une partie de vissage d'accouplement (10a, 10c) avec un filetage de serrage (13a, 13c) et avec une ouverture de passage qui présente au niveau de la périphérie interne une surface de serrage périphérique (15a, 15c) pour l'application contre la surface de butée (9), la portion de connexion (5) diminuant depuis l'épaulement (6) sous forme tronconique avec un angle de conicité β jusqu'à la périphérie tubulaire initiale et formant à cet endroit au niveau de sa surface périphérique extérieure la surface de butée périphérique (9), et
l'ouverture de passage de la partie de vissage d'accouplement (10a, 10c) diminuant ensuite sous forme tronconique au niveau du filetage de serrage (13a, 13c) avec un angle de conicité β' qui est adapté à l'angle de conicité β de la portion de connexion (5) dans la région de la surface de butée (9), et qui forme à cet endroit au niveau de la périphérie interne la surface de serrage périphérique (15a, 15c) pour l'application contre la surface de butée (9),
**caractérisé en ce que**
l'angle de conicité α de la portion de connexion (5) dans la région de la surface d'étanchéité (7) et l'angle de conicité α' de l'alésage de raccordement (23a, 23b, 23c) dans la région de la surface de raccordement (27a, 27b, 27c) vaut 38° à 50°, l'angle de conicité β de la portion de connexion (5) dans la région de la surface de butée (9) et l'angle de conicité β' de l'ouverture de passage dans la région de la surface de serrage (15a, 15c) sont au moins supérieurs de 90° à l'angle de conicité α de la portion de connexion (5) dans la région de la surface d'étanchéité (7) et l'épaulement (6) présente une hauteur (H) qui vaut 0,5 mm à 5 mm, en particulier 0,5 mm à 3 mm et de préférence 1 mm à 2 mm, et de préférence l'épaulement (6) se raccorde directement à la surface d'étanchéité (7).

2. Raccord de tuyauterie selon la revendication 1,
**caractérisé en ce que**
l'angle de conicité α de la portion de connexion (5) dans la région de la surface d'étanchéité (7) et l'angle de conicité α' de l'alésage de raccordement (23a, 23b, 23c) dans la région de la surface de raccordement (27a, 27b, 27c) vaut 38° à 42°, de préférence 40°.

3. Raccord de tuyauterie selon la revendication 1 ou 2,
**caractérisé en ce que**
l'angle de conicité β de la portion de connexion (5) dans la région de la surface de butée (9) et l'angle de conicité β' de l'ouverture de passage dans la région de la surface de serrage (15a, 15c) valent 120° à 180° inclus.

4. Raccord de tuyauterie selon l'une quelconque des revendications 1 à 3,
**caractérisé en ce que**
l'angle de conicité β de la portion de connexion (5) dans la région de la surface de butée (9) et l'angle de conicité β' de l'ouverture de passage dans la région de la surface de serrage (15a, 15c) valent 140° ou 180°.

5. Raccord de tuyauterie selon l'une quelconque des revendications 1 à 4,
**caractérisé en ce que**
pour le rapport de l'épaisseur de paroi (s) de la paroi tubulaire (3) de la conduite tubulaire (1) au diamètre extérieur (d) de la conduite tubulaire (1), on a : 0,04 ≤ s/d ≤ 0,08.

6. Raccord de tuyauterie pour leraccordement d'une conduite tubulaire (1) à paroi mince, en particulier métallique, comprenant une conduite tubulaire (1) avec une portion de connexion façonnée (5) qui augmente sous forme tronconique depuis son extrémité de connexion suivant un angle de conicité α et qui forme à cet endroit au niveau de sa surface périphérique extérieure une surface d'étanchéité périphérique (7) et qui présente un épaulement (6) se raccordant à celle-ci avec une surface de butée (9), et une tubulure de raccordement (20a, 20b, 20c) avec un filetage de raccordement (25a, 25c) et un alésage de raccordement (23a, 23b, 23c) qui diminuent depuis son ouverture sous forme tronconique avec un angle de conicité α' qui est adapté à l'angle de conicité α de la portion de connexion (5) dans la région de la surface d'étanchéité (7), et qui forme à cet endroit au niveau de la périphérie intérieure une surface de raccordement périphérique (27,a, 27b, 27c) pour l'application contre la surface d'étanchéité (7), et une partie de vissage d'accouplement (10a, 10c) avec un filetage de serrage (13a, 13c) et avec une ouverture de passage qui présente au niveau de la périphérie interne une surface de serrage périphérique (15a) pour l'application contre une surface conjuguée (10f), la portion de connexion (5) diminuant depuis l'épaulement (6) sous forme tronconique avec un angle de conicité β jusqu'à la périphérie tubulaire initiale et formant au niveau de sa surface périphérique extérieure la surface de butée périphérique (9), et une bague intermédiaire (10e) étant disposée sur la conduite tubulaire (1) entre la surface de serrage (15a) d'une partie de vissage d'accouplement (10d) tournée vers la tubulure de raccordement (20a) et la surface de butée (9), de telle sorte que lors du montage final de la conduite tubulaire (1), une rotation conjointe de la conduite tubulaire (1) soit empêchée,
**caractérisé en ce que**
l'angle de conicité α de la portion de connexion (5) dans la région de la surface d'étanchéité (7) et l'angle de conicité α' au niveau de l'alésage de raccordement (23a, 23b, 23c) dans la région de la surface de raccordement (27a, 27b, 27c) vaut 38° à 50°,
la bague intermédiaire (10e) présentant une surface conjuguée (10f) s'appliquant contre la surface de butée (9), dont l'inclinaison par rapport à l'axe longitudinal (X-X) du raccord de tuyauterie est adaptée à l'inclinaison de la surface de butée (9) suivant l'angle de conicité β.

7. Raccord de tuyauterie selon la revendication 6,
**caractérisé en ce que**
la bague intermédiaire (10e) présente une surface d'appui (10g) opposée à la surface de serrage (15a) de la partie de vissage d'accouplement (10d), la surface de serrage (15a) et la surface d'appui (10g) étant de préférence orientées perpendiculairement à l'axe longitudinal (X-X) du raccord de tuyauterie.

8. Raccord de tuyauterie selon la revendication 6 ou 7,
**caractérisé en ce que**
l'angle de conicité α de la portion de connexion (5) dans la région de la surface d'étanchéité (7) et l'angle de conicité α' de l'alésage de raccordement (23a, 23b, 23c) dans la région de la surface de raccordement (27a, 27b, 27c) vaut 30° à 42°, de préférence 40°.

9. Raccord de tuyauterie selon l'une quelconque des revendications 6 à 8,
**caractérisé en ce que**
l'angle de conicité β de la portion de connexion (5) dans la région de la surface de butée (9) est au moins supérieur de 90° à l'angle de conicité α de la portion de connexion (5) dans la région de la surface d'étanchéité (7) et en particulier vaut 120° à 180° inclusifs et de préférence vaut 140° ou 180°.

10. Raccord de tuyauterie selon l'une quelconque des revendications 6 à 9,
**caractérisé en ce que**
l'épaulement (6) possède une hauteur (H) qui vaut 0,5 mm à 5 mm, en particulier 0,5 mm à 3 mm et de préférence 1 mm à 2 mm, et de préférence l'épaulement (6) se raccorde directement à la surface d'étanchéité (7).

11. Raccord de tuyauterie selon l'une quelconque des revendications 6 à 10,
**caractérisé en ce que**
pour le rapport de l'épaisseur de paroi (s) de la paroi tubulaire (3) de la conduite tubulaire (1) au diamètre extérieur (d) de la conduite tubulaire (1), on a : 0,04 ≤ s/d ≤ 0,08.

12. Raccord de tuyauterie selon l'une quelconque des revendications 1 à 11,
**caractérisé en ce que**
l'alésage de raccordement (23a, 23b, 23c) présente une surface de butée (30b, 30c) pour la limitation axiale de la course de serrage de la conduite tubulaire (1).

13. Raccord de tuyauterie selon l'une quelconque des revendications 1 à 12,
**caractérisé en ce que**
la surface de raccordement (27a, 27b, 27c) de l'alésage de raccordement (23a, 23b, 23c) présente une rainure d'étanchéité périphérique (28b) pour recevoir un joint d'étanchéité (29b).

14. Raccord de tuyauterie selon l'une quelconque des revendications 1 à 13,
**caractérisé en ce**
**qu'**une région d'étanchéité cylindrique creuse (28c) se raccorde à la surface de raccordement (27a, 27b, 27c) dans l'alésage de raccordement (23a, 23b, 23c), dans laquelle est disposé un joint d'étanchéité profilé (29c).

15. Raccord de tuyauterie selon la revendication 14,
**caractérisé en ce que**
le joint d'étanchéité profilé (29c) est réalisé de telle sorte qu'il s'adapte à l'angle de conicité α de la portion de connexion (5) dans la région de la surface d'étanchéité (7) de la conduite tubulaire (1).

16. Raccord de tuyauterie selon l'une quelconque des revendications 1 à 15,
**caractérisé en ce que**
la partie de vissage d'accouplement est réalisée sous forme d'écrou d'accouplement (10a), le filetage de raccordement (25a) de la tubulure de raccordement (20a, 20b) étant réalisé sous forme de filetage extérieur au niveau de la périphérie extérieure de la tubulure de raccordement (20a, 20b), et le filetage de serrage (13a) étant réalisé sous forme de filetage intérieur au niveau de la périphérie intérieure de l'ouverture de passage de l'écrou d'accouplement (10a).

17. Raccord de tuyauterie selon l'une quelconque des revendications 1 à 15,
**caractérisé en ce que**
la partie de vissage d'accouplement est réalisée sous forme de vis d'accouplement (10c), le filetage de raccordement (25c) de la tubulure de raccordement (20c) étant réalisé sous forme de filetage intérieur au niveau de la périphérie intérieure de l'alésage de raccordement (23c) de la tubulure de raccordement (20c), et le filetage de serrage (13c) étant réalisé sous forme de filetage extérieur au niveau de la périphérie extérieure de la vis d'accouplement (10c).

18. Conduite tubulaire (1) pour un raccord de tuyauterie selon l'une quelconque des revendications 1 à 17,
**caractérisée par**
les caractéristiques de la conduite tubulaire (1) selon l'une quelconque des revendications 1 à 12.

19. Tubulure de raccordement (20a, 20b, 20c) pour un raccord de tuyauterie selon l'une quelconque des revendications 1 à 15,
**caractérisée par**
les caractéristiques de la tubulure de raccordement (20a, 20b, 20c) selon l'une quelconque des revendications 1 à 17.
